# EUROPEAN PATENT APPLICATION

(11) **EP 3 113 010 A1**
(43) Date of publication of application: **04.01.2017**
(21) Application number: 16175802.4
(22) Date of filing: 22.06.2016
(51) Int. Cl.: G06F 3/12

(54) **WORKFLOW CREATION SUPPORT DEVICE, SYSTEM, METHOD, AND PROGRAM**

(30) Priority: 30.06.2015 JP 2015131291
(71) Applicant: Fujifilm Corporation, Minato-ku Tokyo 106-8620 (JP)
(72) Inventor: HANE, Ryuichi, Tokyo, 106-8620 (JP)
(74) Representative: Klunker . Schmitt-Nilson . Hirsch

(57) **Abstract**

A workflow creation support device (140) includes: a job information capturing unit (252) that captures job information including information on a plurality of parameters for specifying job contents; a narrowing processing unit (246) that narrows a plurality of pre-registered templates as selection candidates, using information on at least some of the parameters from the information on the parameters; a selection-screen-data creating unit (244B) that creates selection screen data used for displaying information on the narrowed templates and displaying a selection screen for receiving an operation allowing a user to select one template from the selection candidates; and a job-definition-file creating unit (250) that creates a job definition file based on information on the selected template and the information on the parameters.

## Description

### BACKGROUND OF THE INVENTION

### Field of the Invention

The present invention relates to a workflow creation support device, system, method, and program that support the construction of a workflow for printing.

### Description of the Related Art

In recent manufacturing processes of printed matters, workflows have been generally digitized by desktop publishing (DTP) or computer to plate (CTP) that has been widely used in the printing field. Moreover, in order to improve the production efficiency of printed matters, various automation techniques of determining printing parameters have been proposed (See Japanese Patent Application Laid-Open No. 2004-164570 and Japanese Patent Application Laid-Open No. 2015-069489).

Japanese Patent Application Laid-Open No. 2004-164570 proposes a device and method for automatically creating printing/platemaking workflows using various kinds of information including environment information, output requirements, and workflow creation rules.

Japanese Patent Application Laid-Open No. 2015-069489 proposes a parameter setting support system that can provide useful information for an operator when a parameter value is optionally corrected based on a data template that is an aggregate of parameter initial values for printing. Japanese Patent Application Laid-Open No. 2015-069489 proposes a configuration in which statistical processing is performed on segments of difference data between an aggregate of parameters definitive values set several times in the past and an aggregate of initial values constituting a data template and then the results of the statistical processing are displayed simultaneously with the aggregate of the initial values of the data plate.

### SUMMARY OF THE INVENTION

Workflow soft introduced to, for example, printing companies causes computers to perform functions such as definition of workflows, job construction, a workflow operation by executing created jobs, and process control, corresponding to an operating process. "Soft" is an abbreviation of software and "software" is synonymous with a program.

However, conventional workflow software needs a long time for job creation and job updating because of detailed parameters to be set by a user on a screen. For example, by a person in charge of downstream processes such as a construction department and a production department that belong to a printing company, an operation instruction is obtained from upstream processes such as a sales department and a planning department and then printing job contents to be executed are determined from the contents of the operation instruction. Subsequently, segments of various data are inputted through a terminal device so as to create job tickets such as a job definition format (JDF) file. The contents of executed printing jobs are specified by various items (parameters) and the completion of data entry requires a large number of man hours. Conventional workflow software in particular registers a large number of templates in a database beforehand in order to produce various kinds of printed matters. However, templates to be used are hard to find because of a large number of registered templates, requiring extended hours of selection by a user acting as an operator.

The present invention has been devised in view of such circumstances. An object of the present invention is to provide a workflow creation support device, system, method and program that can simplify job creation and job updating so as to shorten an operation time.

In order to solve the problem, the following aspects of invention are provided.

A workflow creation support device according to a first aspect is a workflow creation support device that supports creation of a workflow for printing, the workflow creation support device including: a job information capturing unit that captures job information including information on a plurality of parameters for specifying job contents; a narrowing processing unit that narrows a plurality of pre-registered templates as selection candidates, using information on at least some of the parameters from the information on the parameters captured by the job information capturing unit; a selection-screen-data creating unit that creates selection screen data used for displaying, as selection candidates, information on the templates narrowed by the narrowing processing unit and displaying a selection screen for receiving a selecting operation allowing a user to select one template from the selection candidates; and a job-definition-file creating unit that creates a job definition file based on information on the one template selected by the selecting operation and the information on the parameters.

The first aspect can improve the selection of the template and reduce an operating time when the user selects the template.

The job information capturing unit captures job information as, for example, data attached to a POST method of hypertext transfer protocol (HTTP), an electronic file including the job information, and a paper medium describing the job information.

A second aspect can be, in the workflow creation support device according to the first aspect, a workflow creation support device in which the job information capturing unit includes a file processing unit that captures an electric file of an operation instruction created by an external system and acquires the job information from the electronic file of the operation instruction. The electronic file may include an electronic file obtained by reading the paper medium describing the job information.

The external system indicates a device different from the workflow creation support device or a computer system. The external system may be, for example, the management information system of a printing company.

As a third aspect, in the workflow creation support device according to the second aspect, the operation instruction can be an electronic file in a different file format from the job definition file.

For example, the job definition file can be a JDF file and the operation instruction can be a comma separated value (CSV) file.

A fourth aspect, in the workflow creation support device according to any one of the first to third aspects, is a workflow creation support device including an input-screen-data creating unit that creates input screen data used for displaying an input screen allowing the user to input information on some or all of the parameters, the job information capturing unit including an input information processing unit that acquires the job information including information inputted from the input screen.

The fourth aspect allows a user to input, from the input screen, information on parameters undescribed in an operation instruction. Narrowing can be performed using the information inputted from the input screen.

As a fifth aspect, in the workflow creation support device according to any one of the first to fourth aspects, the narrowing processing unit narrows the plurality of pre-registered templates as the selection candidates, by using the information on at least some of the parameters as a search key from the information on the parameters.

The designations of plurality of pre-registered templates are searched (that is, narrowed) using parameter information as a search key. The template of the search result can be a selection candidate template. From the plurality of pre-registered templates, templates matching search conditions (that is, narrowing conditions) that are combinations of search keys are extracted as selection candidates.

A sixth aspect, in the workflow creation support device according to any one of the first to fifth aspects, includes a condition setting unit that sets narrowing conditions for the narrowing, the narrowing conditions being changeable.

The narrowing conditions based on parameters may be predetermined fixed conditions (unchangeable conditions) but may vary among printing companies. Thus, the narrowing conditions are preferably variable.

As an example of a change of the narrowing conditions, the search key described in the fifth aspect may be changed.

As a seventh aspect, in the workflow creation support device according to any one of the first to sixth aspects, the template is an imposition template.

Various imposition templates are available and thus the number of plurality of pre-registered templates may reach several hundreds to several thousands. Therefore, it is quite effective to narrow imposition templates.

As an eighth aspect, in the workflow creation support device according to any one of the first to seventh aspects, the workflow creation support device is a web server.

According to the eighth aspect, the selection screen can be displayed on a terminal device with installed web browser software, allowing the user to select the template from the terminal device.

A workflow creation support system according to a ninth aspect includes: the workflow creation support device according to any one of the first to eighth aspects; a template database that stores the templates; and a terminal device connected to the workflow creation support device via a communication line, wherein the terminal device includes a display device and an input device, the display device displays the selection screen based on the selection screen data, and the selecting operation is performed from the input device.

The communication line may be a local area network, a wide area network, or a combination thereof.

A workflow creation support method according to a tenth aspect is a workflow creation support method that supports creation of a workflow for printing, the method including: a job information capturing step of capturing job information including information on a plurality of parameters for specifying job contents; a narrowing processing step of narrowing a plurality of pre-registered templates as selection candidates, using information on at least some of the parameters from the information on the parameters captured by the job information capturing unit; a selection screen data creating step of creating selection screen data used for displaying, as selection candidates, information on the templates narrowed in the narrowing processing step and displaying a selection screen for receiving a selecting operation allowing a user to select one template from the selection candidates; a selecting step of displaying the selection screen containing display of the selection candidates on a display device and receiving the selecting operation; and a job-definition-file creating step of creating a job definition file based on information on the one template selected by the selecting operation and the information on the parameters.

A program according to an eleventh aspect is a program enabling a computer to perform a workflow creation support function for printing, the program enabling the computer to perform: a job information capturing function of capturing job information including information on a plurality of parameters for specifying job contents; a narrowing processing function of narrowing a plurality of pre-registered templates as selection candidates, using information on at least some of the parameters from the information on the parameters captured by the job information capturing function; a selection screen data creating function of creating selection screen data used for displaying, as selection candidates, information on the templates narrowed by the narrowing processing function and displaying a selection screen for receiving a selecting operation allowing a user to select one template from the selection candidates; and a job-definition-file creating function of creating a job definition file based on information on the one template selected by the selecting operation and the information on the parameters.

The present invention can improve selection when a user selects one template from a plurality of pre-registered templates, thereby reducing an operating time in job creation and job updating.

### BRIEF DESCRIPTION OF THE DRAWINGS

Fig. 1 is a flowchart illustrating an example of an operation process in a printing company;
Fig. 2 is a schematic diagram illustrating a printed matter production system including a workflow creation support system according to an embodiment of the present invention;
Fig. 3 is an image illustrating an example of a workflow configuration;
Fig. 4 is an explanatory drawing illustrating an example of a screen change of an operation screen;
Fig. 5 illustrates an image example of a job list screen;
Fig. 6 illustrates an image example of a job information screen;
Fig. 7 is a table illustrating an example of settable items on the job information screen;
Fig. 8 illustrates an image example of a job edition screen;
Fig. 9 illustrates an image example of a selection screen that displays a list of imposition templates serving as selection candidates on the job edition screen;
Fig. 10 is a block diagram illustrating a system configuration example of the printed matter production system;
Fig. 11 is a block diagram illustrating a management information system (MIS) server;
Fig. 12 is a block diagram illustrating the workflow system server;
Fig. 13 is a block diagram of a second terminal device;
Fig. 14 is a sequence diagram illustrating the operations of the printed matter production system;
Fig. 15 is a schematic diagram illustrating an example of data constituting the file of the operation instruction; and
Fig. 16 is a schematic diagram of a printed matter production system according to another embodiment.

### DETAILED DESCRIPTION OF THE EMBODIMENTS

An embodiment of the present invention will be specifically described below in accordance with the accompanying drawings.

### [Overview of printing]

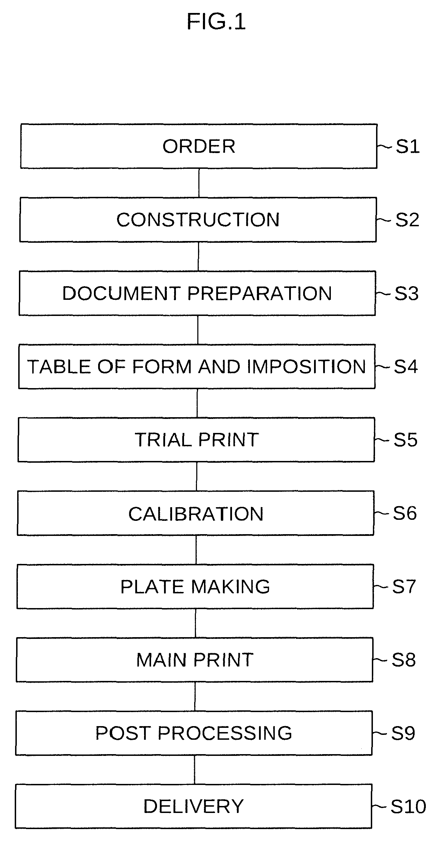

First, the overview of printing in a printing company will be described below. Fig. 1 is a flowchart illustrating an example of an operation process in the printing company. The printing includes order (step S1), construction (step S2), document preparation (step S3), table of form and imposition (step S4), trial print (step S5), calibration (step S6), plate making (step S7), main print (step S8), post processing (step S9), and delivery (S10).

In the step of order (step S1), a request for production of printed matters from a customer is received, that is, an order for printed matters is received. For example, a salesperson belonging to the sales department of the printing company receives an order for printed matters from a customer, that is, a client, or the salesperson may receive an order for printing through a web site on the internet. Order information indicating the contents of orders is registered in a management information system that is a computer system for managing the management information of the printing company.

The step of construction (step S2) includes designing a production process according to the contents of an order, creating an operation instruction, creating/updating a job, and procuring materials. For example, a person in charge of construction in the printing company inputs information on various parameters that determine the contents of jobs, based on the order information. A workflow creation supporting function according to the embodiment of the present invention contributes to simplification and labor saving of operations in the construction (step S2). The detail will be discussed later.

In the step of document preparation (step S3), electronic data is produced for printing documents in response to an order. For example, a DTP designer or a DTP operator produces design data as electronic data for printing documents.

In the step of table of form and imposition (step S4), the table of form is determined as a page layout for received documents and then the pages of the documents are laid out on the surface of a printing plate according to the table of form. In an actual operation, imposition is performed on a computer using an imposition template provided beforehand for a workflow system.

In the step of trial print (step S5), trial print is performed before main print so as to confirm the quality of a print result. The trial print (step S5) is not always performed using the same combination of a printing machine and sheets as in main print, and thus may be performed using an output device that simulates an output result of main print. The need for correcting document data (calibration) is determined based on the result of the trial print. If the result of the trial print does not satisfy the request of a customer, calibration is performed.

In the step of calibration (step S6), data is corrected. The step includes color adjustment, image processing, and layout change. The trial print (step S5) and the calibration (step S6) may be repeated several times until a satisfactory print result is obtained for the request of the customer. If a trial print result satisfies the request of the customer, the process proceeds to plate making (step S7) for main print.

In the step of plate making (step S7), a printing plate is produced based on design data for printing. After calibration (step S6), a printing plate for main print is produced.

In the step of main print (step S8), the printing plate is set in a printing machine to perform printing on print media such as sheets of paper. Print media obtained by main print (step S8) will be referred to as printed sheets. In the case of printing using a digital printing machine having no printing plate, e.g., an ink jet printing machine, a printing plate does not need to be produced. This eliminates the step of plate making (step S7). "Printing machine" is synonymous with terms such as a printing press, a printer, an image forming device, and an image recording device.

In the step of post processing (step S9), various kinds of processing are performed after printing. "Post processing" is a general name of various kinds of processing on printed media. Post processing specifically includes, for example, cutting, folding, stapling, special processing, surface treatment, and bookbinding. Moreover, the post processing (step S9) is not limited to one kind of processing and may be a combination of kinds of processing. Through the step of post processing (step S9), print media are processed into books, magazines, leaflets, catalogs, and other products.

In the step of delivery (step S10), the products of printed matters are delivered to a customer.

In order to efficiently operate and manage the entire flow or a part of the flow of printing, a computer system installed with workflow soft is used.

The present embodiment will describe a workflow creation support system cooperating with a management information system and a workflow management system.

### [Overview of printed matter production system]

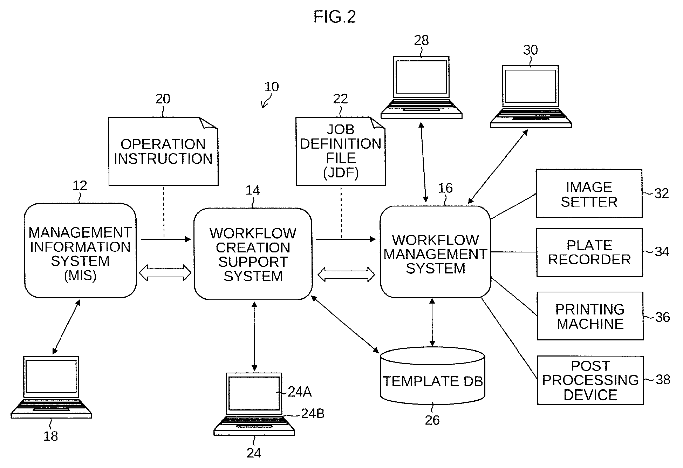

Fig. 2 is a schematic diagram illustrating a printed matter production system including the workflow creation support system according to the embodiment of the present invention. A printed matter production system 10 includes a management information system 12, a workflow creation support system 14, and a workflow management system 16.

The management information system 12 is a computer system that manages management information on the printing company and is called a management information system (MIS). The management information system 12 is the main system of the printing company and performs production control or inventory control. The management information may include, for example, various kinds of information such as order information, estimate information, sales information, management plans, and inventory information.

The management information system 12 is achieved by a computer (not illustrated) and a program for providing the computer with the function of managing the management information. In the management information system 12, the required function may be performed by a single computer or may be shared by multiple computers.

The management information system 12 is connected to a first terminal device 18 via a communication line. The first terminal device 18 is a customer terminal accessible to the management information system 12. Information on the management information system 12 can be registered, viewed, or edited using the first terminal device 18.

For example, when an order is received, a salesperson belonging to the sales department of the printing company operates the first terminal device 18 so as to register order information in the management information system 12 through the first terminal device 18. The order information may include basic order information such as order numbers, information that specifies customers (customer information), the contents of orders, and delivery due dates. When the order information is pre-registered, it is not necessary to register all information items (parameters) and thus some of the parameters may remain undetermined.

The management information system 12 creates an operation instruction 20 corresponding to the order information, based on the registered order information. The operation instruction 20 may be outputted as an electronic file such as a CSV (Comma-Separated Values) file or a hard copy such as a printed sheet of paper. Additionally, the operation instruction 20 is outputted as data attachable in a POST method of HTTP. The electronic file may be an electronic file of read data that is obtained by reading the operation instruction 20 such as a printed sheet of paper. The management information system 12 corresponds to an aspect of "external system".

The workflow creation support system 14 is a computer system that is located in an intermediate layer between the management information system 12 and the workflow management system 16, supports delivery of information between the management information system 12 and the workflow management system 16, and promotes automation by the workflow management system 16. The workflow creation support system 14 is achieved by a computer (not illustrated) and a program for providing the computer with the function of supporting workflow creation. In the workflow creation support system 14, the required function may be performed by a single computer or may be shared by multiple computers.

The workflow creation support system 14 creates a job definition file 22 to be delivered to the workflow management system 16, based on information described in the operation instruction 20 and information inputted from a second terminal device 24. The job definition file 22 is, for example, an electronic file in job definition format (JDF). The job definition file 22 created by the workflow creation support system 14 acts as an execution request file for requesting creation or updating of a job to the workflow management system 16.

The workflow creation support system 14 is configured using a web server and is connected to the second terminal device 24 via a communication line. The second terminal device 24 is a web customer terminal accessible to the workflow creation support system 14. The second terminal device 24 is operated by, for example, a person who is in charge of construction and belongs to the construction department of the printing company. The second terminal device 24 is installed with web browser software and thus various operations can be performed by the web browser of the terminal device 24.

Detailed information on various parameters not described in the operation instruction 20 is inputted to the workflow creation support system 14 through the second terminal device 24. The use of the second terminal device 24 allows input and confirmation of various kinds of information required for workflow construction and creation and editing (updating) of jobs in relation to the production of printed matters according to the contents of orders.

When a job is created or updated by the workflow creation support system 14, various pre-registered templates can be used. A template DB 26, which is a database for beforehand storing multiple templates, is connected to the workflow management system 16. "DB" designates a database. The workflow creation support system 14 can obtain template information via the workflow management system 16 or by direct access to the template DB 26. The template DB 26 corresponds to an aspect of "template database".

The templates pre-registered in the template DB 26 may include, for example, a job template, a workflow set template, and an imposition template. The job template is a template relating to the described items of jobs. The workflow set template is a template relating to workflow configurations. The imposition template is a template related to imposition, e.g., a stripping sheet template. The template DB 26 has a database constructed for each kind of templates.

The workflow creation support system 14 creates selection screen data and supplies the data to the second terminal device 24. The selection screen data is used for displaying a selection screen that allows a user to select desired one of the templates pre-registered in the template DB 26. The second terminal device 24 includes a display device 24A and an input device 24B. A user can select a desired template by operating the input device 24B, e.g., a keyboard while viewing the selection screen displayed on the display device 24A of the second terminal device 24.

In the provision of the selection screen for selecting a template, the workflow creation support system 14 performs a narrowing processing to narrow the number of candidate templates from the templates pre-registered in the template DB 26, based on information described in the operation instruction 20 and various kinds of information inputted through the second terminal device 24, and then the workflow creation support system 14 provides a list of selection candidates to the second terminal device 24.

The second terminal device 24 can display the list of selection candidates as a result of narrowing the number of candidate templates, allowing the user to select one template from the displayed selection candidates.

The workflow creation support system 14 creates the job definition file 22 including information described in the operation instruction 20 and various kinds of information inputted through the second terminal device 24, and then the workflow creation support system 14 provides the job definition file 22 for the workflow management system 16.

The workflow management system 16 creates, updates, and deletes a job according to the job definition file 22. In other words, the job definition file 22 is used as information that controls the creation of workflows in the workflow management system 16. The workflow creation support system 14 acts as a workflow controller that controls the creation of workflows in the workflow management system 16.

The workflow management system 16 is a computer system that cooperates with the workflow creation support system 14 and has the printing workflow function of job creation/updating, document reception, page calibration, rendering, and device output.

The workflow management system 16 is connected to a third terminal device 28 via a communication line. The third terminal device 28 is a customer terminal accessible to the workflow creation support system 14. The third terminal device 28 indicates a terminal device operated by a document preparation department for preparing documents, a designer, a partner company, or a person in charge from a customer company that places an order. The third terminal device 28 is used for, for example, document preparation and calibration.

The workflow management system 16 is connected to a fourth terminal device 30 via a communication line. The fourth terminal device 30 indicates a terminal device operated by, for example, a person in charge of production in the production department of the printing company.

The workflow management system 16 can be connected to, for example, output devices such as an image setter 32, a plate recorder 34, and a printing machine 36, and a post processing device 38. The workflow management system 16 acts as a raster image processor (RIP) and can provide printing data suitable for output devices such as the image setter 32, the plate recorder 34, and the printing machine 36.

The functions of the management information system 12, the workflow creation support system 14, and the workflow management system 16 may be each performed by a single computer or may be each shared by multiple computers.

Furthermore, the function of the workflow creation support system 14 and the function of the workflow management system 16 may be performed by a single computer. For example, in the same server cabinet, a program for performing the function of the workflow creation support system 14 and a program for performing the function of the workflow management system 16 are installed so as to coexist in the single cabinet.

In Fig. 2, the first terminal device 18, the second terminal device 24, the third terminal device 28, and the fourth terminal device 30 are each illustrated as a single computer. Each of the systems does not always have to be connected to the single terminal device and thus may be each connected to two or more terminal devices. Moreover, the management information system 12, the workflow creation support system 14, and the workflow management system 16 do not always have to be connected to the different terminal devices and each of the terminal devices may be accessible to the multiple systems.

### [The function of workflow creation support system 14]

The function of the workflow creation support system 14 according to the present embodiment will be described below.

### (1) Job creation and updating

The workflow creation support system 14 receives data on the operation instruction 20 from the management information system 12 and then creates and updates a job for the workflow management system 16. The job creation and updating for the workflow management system 16 from the workflow creation support system 14 can be performed by the job definition file 22 in JDF.

In the creation of a new job, a job template can be specified from the management information system 12. If a job template is not specified from the management information system 12, a job template for JDF input set by the workflow management system 16 is used. In job updating for changing the contents of an existing job, the job template of the existing job is used.

### (2) Workflow configuration

The workflow creation support system 14 constitutes a section workflow for each workflow component (i.e., each job part). In this case, a basic workflow template is selected as follows:

### [Selecting method 1]

If a workflow set template is specified, the specified workflow set template is used.

### [Selecting method 2]

If a workflow set template is not specified and a job template is specified by a system setting of the workflow management system 16, workflows used in a pre-registered job template have press device profiles with the same designation. The press device profile designates the model of a printing press used for outputting an image. The designation of the press device profile corresponds to the model name of the printing press.

### [Selecting method 3]

If a workflow set template is not specified and a workflow set is specified by a system setting of the workflow management system 16, some of pre-registered workflow set templates are used with the same press device profile designation and the same medium type.

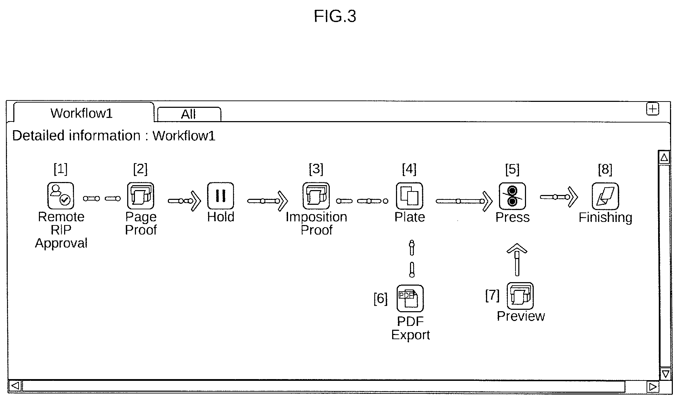

Fig. 3 is an image illustrating an example of a workflow configuration. In a workflow configured by the present system, [1] document reception, [2] page calibration, [3] imposition calibration, and [4] plate output can be arranged in series. The workflow may include some or all of [5] output device selection, [6] portable document format (PDF) export, [7] preview preparation, and [8] finishing. The items of the workflow can be optionally edited based on the workflow set template.

### (3) Imposition setting

According to the function of the workflow creation support system 14, stripping imposition is configured using a stripping sheet template registered in the template DB 26 of the workflow management system 16 and is allocated to the items of the workflow.

If an imposition template is specified from the management information system 12, stripping imposition is configured using the specified imposition template.

If an imposition template is not specified from the management information system 12, imposition set for the items of the workflow in the workflow set template is used.

Regarding marks including a trim mark, a crop mark, and a register mark, if a stripping sheet template is specified, marks set for the specified stripping sheet template are set. If a stripping sheet template is not specified, imposition marks set for "[4] plate output" of the workflow set template are used.

### (4) Trim width specification

The workflow creation support system 14 can specify a trim width specified from the management information system 12 and overwrite a trim width set for the stripping sheet template. "Trim" means a margin provided around a trim size. "Trim" is also called "bleed" or "margin". The trim width is specified by the following two methods:

### [Specifying method 1]

The values of a spine, a face, a head, and a foot are specified. The spine corresponds to "Spine", the face corresponds to "Face", the head corresponds to "Head", and the foot corresponds to "Foot".

### [Specifying method 2]

Central trims are specified vertically and horizontally.

### (5) Job deletion

The workflow creation support system 14 can specify a job identification (ID), which is an order number or a job identification code, from the management information system 12 and delete a job for the workflow management system 16. An instruction for job deletion from the workflow creation support system 14 to the workflow management system 16 is provided in job messaging format (JMF).

### (6) Cooperation with MIS using a CSV file

The workflow creation support system 14 can receive a CSV file outputted from the management information system 12 and request the workflow management system 16 to create, update, and delete a job. Files in other general formats or a unique format may be used in addition to the CSV file.

The workflow creation support system 14 receives CSV files in folders. The folders for reception are prepared as a folder for job creation/updating and a folder for job deletion.

The workflow creation support system 14 extracts an order number or a job ID from the CSV file inputted in the folder for job creation/updating. If the job having the extracted order number or job ID exists in the database of the workflow management system 16, the corresponding job is updated. Otherwise a new job is created.

The workflow creation support system 14 extracts an order number or a job ID from the CSV file inputted in the folder for job deletion, and deletes the job having the extracted order number or job ID.

If the inputted CSV file is successfully processed (job creation, updating, or deletion), the inputted CSV file is stored in a success folder. If the inputted CSV file is unsuccessfully processed, the inputted CSV file is stored in a fault folder.

A CSV file corresponds to a job of the workflow management system 16. Data of one section is generated using data of one line of the CSV file. Regarding order numbers and job names that are common data in a section, values in the first row are used and data in the second and subsequent rows is ignored in a CSV data column.

### (7) Operation by a web customer screen

The workflow creation support system 14 includes a web server. The web browser of the second terminal device 24 serving as a web customer is operated so as to create and update jobs and confirm a list of jobs. It is preferable to prohibit a job from being deleted using operation from the web browser.

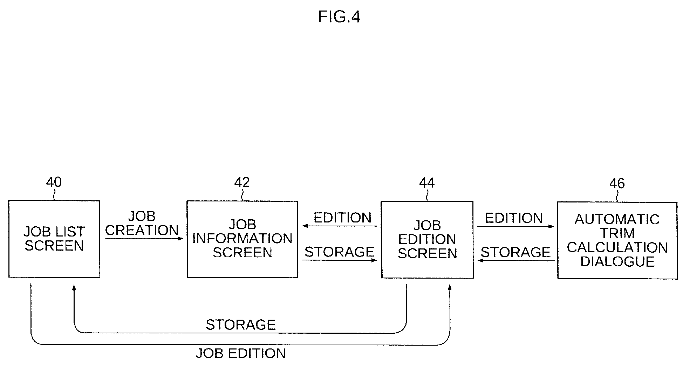

Fig. 4 illustrates an example of a screen change of an operation screen. In the present system, operation screens displayed by a web browser include a job list screen 40, a job information screen 42, a job edition screen 44, and an automatic trim calculation dialogue 46.

The job list screen 40 is a screen for displaying a list of jobs created from the workflow creation support system 14. The job information screen 42 is a screen for inputting basic information on the contents of a job. The job edition screen 44 is an operation screen in which an operation is performed for constructing a detailed structure for each job. The automatic trim calculation dialogue 46 is a screen for setting a trim width and sets parameters necessary for input of a fixed value and automatic calculation.

### [Job list screen]

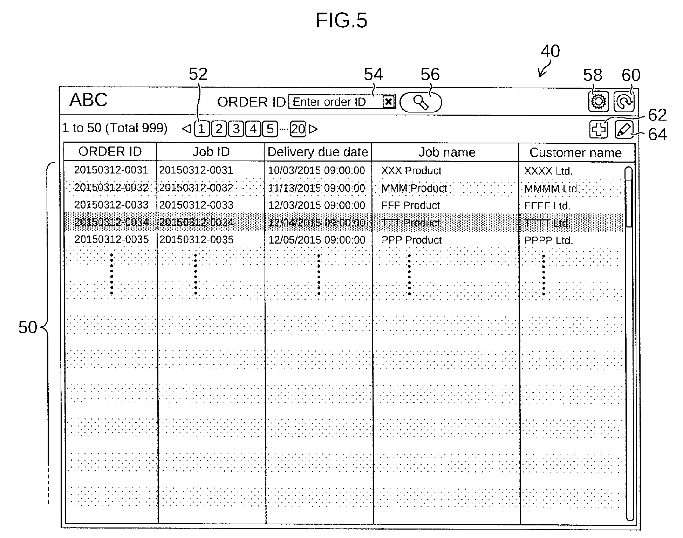

Fig. 5 illustrates an example of the job list screen 40. The job list screen 40 has a job list display area 50, display switching buttons 52, a search bar 54, a search button 56, a screen setting button 58, a reloading button 60, a new job button 62, and an edit button 64.

The job list display area 50 displays a job list in tabular list form. For example, 50 jobs are displayed on one screen. Another 50 jobs prior to or subsequent to the 50 jobs can be displayed by the display switching function of the display switching button 52.

The job list display area 50 sequentially displays an order ID, a job ID, a delivery time, a job name, and a customer name for each job from the left column of Fig. 5. An order ID is synonymous with an order number. The job ID may be also synonymous with an order number. Jobs in the job list may be arranged in the descending order of order IDs.

A press on the screen setting button 58 displays a setting screen for a screen, allowing a setting of a display method. "Press" on a button of a graphical user interface (GUI) means an input of a command associated with the button in response to a user operation, e.g., a touch.

When a text is inputted as a character string into the search bar 54 and then the search button 56 is pressed, the inputted character string is compared with order IDs by a prefix search, so that only jobs complying with the condition can be displayed. The item for search is not limited to "order ID" and thus jobs are searched by other items such as a job name or a customer name.

The reloading button 60 is a button for updating the job list.

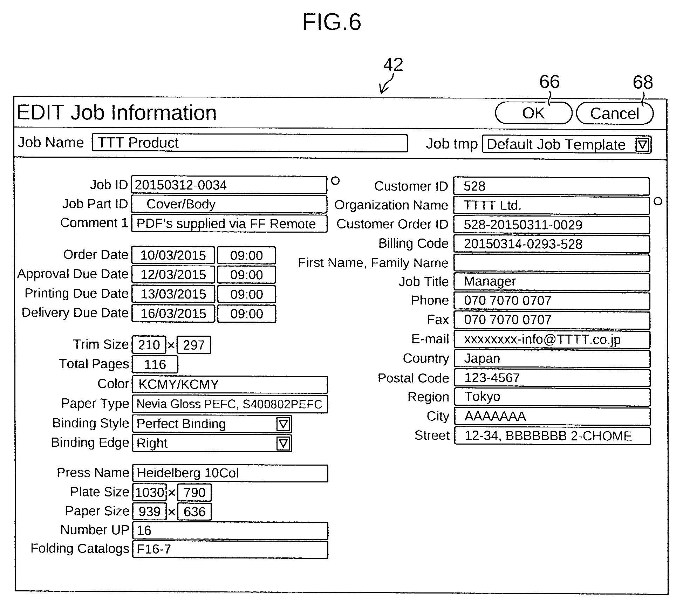

The new job button 62 is a button operated when a new job is created. A press on the new job button 62 displays the job information screen 42 (Fig. 6) for inputting and editing job information.

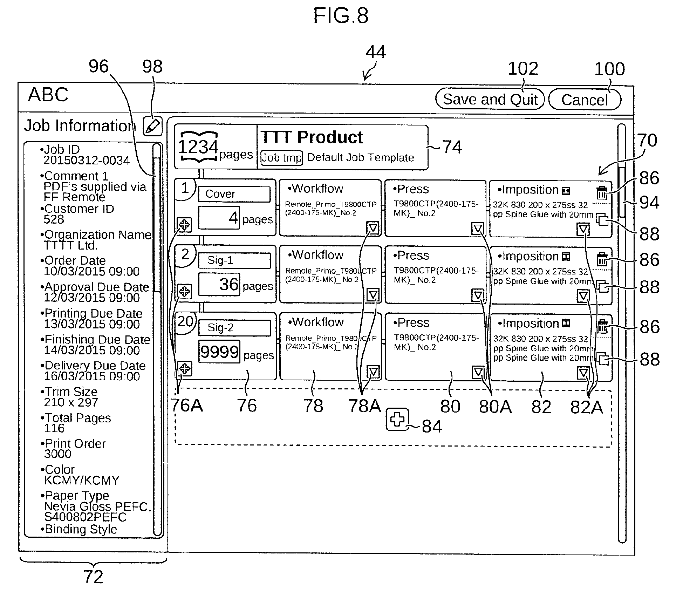

When one of listed jobs is selected and the edit button 64 is pressed, the job edition screen 44 (Fig. 8) is displayed for the selected job.

### [Job information screen]

Fig. 6 illustrates an example of the job information screen 42. The job information screen 42 is opened by a press on the new job button 62 from the job list screen 40 illustrated in Fig. 5 or an instruction from the job edition screen 44 (Fig. 4). The job information screen 42 is a screen for inputting job information that is basic information on jobs. The job information screen 42 corresponds to an aspect of "an entry screen that allows a user to input information on some or all of parameters".

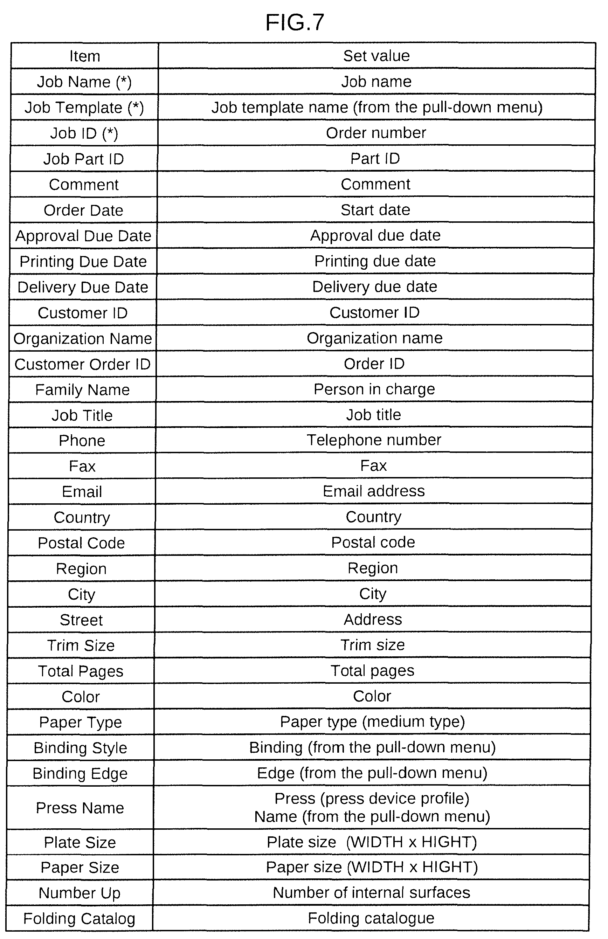

For example, settable items on the job information screen 42 are illustrated in Fig. 7. Fig. 7 illustrates an example of settable items on the job information screen 42. Items marked with (*) in Fig. 7 are preferably indispensable as input items. Items can be displayed in multiple languages. The designations of items can be changed by changing a description of a local file.

The job basic information can be partially retrieved from the operation instruction 20 received from the management information system 12.

The job information screen 42 has an OK button 66 and a cancel button 68. When the OK button 66 is pressed, the setting contents are stored and the job information screen 42 is closed. After the job information screen 42 is closed, the job edition screen 44 is displayed.

When the cancel button 68 is pressed, the inputted setting contents are not stored and the job information screen 42 is closed. When a new job is created, the job list screen 40 is displayed after the cancel button 68 is pressed to close the job information screen 42. Meanwhile, when an existing job is updated, the job edition screen 44 is displayed after the cancel button 68 is pressed to close the job information screen 42.

### [Job edition screen]

Fig. 8 is an example of the job edition screen 44. The job edition screen 44 is a screen that constructs a workflow based on job information serving as basic information on jobs and requests the workflow management system 16 to create or update jobs.

The job edition screen 44 has a job edition area 70 and a job information display area 72. The job edition area 70 has a job name block 74, section setting blocks 76, workflow selection blocks 78, press selection blocks 80, and imposition selection blocks 82.

The job name block 74 displays the total number of pages and a job name. A job template is selected from the job name block 74. The name of the selected job template is displayed in the job name block 74.

The section setting block 76 is a setting field for setting a section name and the number of section pages. The section name set in the section setting block 76 is reflected on a description of a section in the workflow management system 16.

The workflow selection block 78 is a block for selecting a workflow set template. When a pull-down mark 78A of the workflow selection block 78 is clicked, a list of prepared workflow set templates is displayed. A user can select a desired one from the displayed list of workflow set templates. The workflow selection block 78 displays the name of the selected workflow set template.

The press selection block 80 is a block for selecting a press device profile. When a pull-down mark 80A of the press selection block 80 is clicked, a list of pre-registered press device profiles is displayed. A user can select desired one from the displayed list of press device profiles. The press selection block 80 displays the name of the selected press device profile.

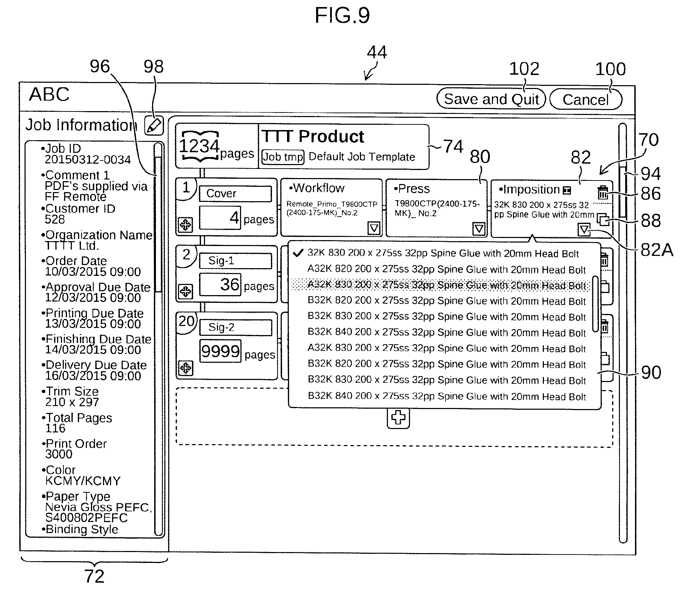

The imposition selection block 82 is a block for selecting an imposition template. In this example, a stripping sheet template is selected as an imposition template. When a pull-down mark 82A of the imposition selection block 82 is clicked, a selection list of imposition template candidates is displayed from the pre-registered imposition templates (Fig. 9).

Fig. 9 illustrates an example of a selection screen that displays the selection list of imposition template candidates. When a pull-down mark 82A is clicked, a selection list 90 of imposition template candidates is displayed. The imposition templates presented on the list 90 are obtained as a result by narrowing the templates pre-registered in a database using job information that is basic information on jobs.

The name of the template is determined by optionally combining information on items such as "press device (model) name", "plate size", "paper size", "trim size", "binding method", "folding", "total pages", and "purpose" that are applicable to the template. "Purpose" is, for example, "front cover" or "cover".

At least some of information items used for template names are identical to some parameters of job information serving as basic information on jobs. Thus, in the present embodiment, multiple pre-registered templates are automatically narrowed for template names using a search key that is parameter information included in the job basic information, and then only the templates matching the narrowing conditions are provided for a user as selection candidates.

The narrowing conditions (filtering conditions) can be changed by a setting file in the system. The narrowing conditions can be set as the AND conditions of items included in the job basic information. For example, the narrowing conditions as default include a press device profile selected in the press selection block 80 and AND conditions (logical AND) such as "trim size", "binding", and "edge" that are set on the job information screen 42.

As an example of a change of the narrowing conditions, a search key is changed during automatic narrowing for a template name, the search key being parameter information included in the job basic information.

Parameter types useful for narrowing may include "trim size", "binding", "edge", "printing press name", "post-processing machine name", "paper size", "plate size", "the number of sheet internal surfaces", and "folding catalogue". Of these parameter types, "trim size", "printing press name", "paper size", and "the number of sheet internal surfaces" are information particularly effective for narrowing. Thus, information on at least one parameter of "trim size", "printing press name", "paper size", and "the number of sheet internal surfaces" is preferably used as narrowing conditions.

Various kinds of imposition templates are provided. The number of imposition templates registered in the system may reach several thousands. According to the present embodiment, templates are narrowed for the names of imposition templates under the narrowing conditions based on the job basic information, and then the template list 90 matching the conditions is displayed.

For example, several to 20 or several tens of templates as selection candidates are displayed in the list 90 as the result of narrowing, depending on the narrowing conditions or the number of registered templates. Thus, a user can easily find a desired template from the list 90, simplifying an operation of selecting templates.

A user can select a desired imposition template from the list 90 of displayed imposition templates. The imposition selection block 82 displays the name of the selected imposition template.

As illustrated in Fig. 8, one job includes multiple sections, each including a workflow. Each section is associated with the section setting block 76, the workflow selection block 78, the press selection block 80, and the imposition selection block 82.

The position of the section can be moved by operating a mouse or the like with a move button 76A dragged in the section setting block 76.

An add button 84 is displayed below the lowest section. When the add button 84 is pressed, a new section is added at the bottom. In the newly added section, all set values or the like are not inputted.

Moreover, each section has a delete button 86 and a copy button 88. The delete button 86 is a button for deleting each selected section. When a section is deleted, a confirmation dialogue (not illustrated) is displayed and then an OK button in the confirmation dialogue is pressed to delete the section.

The copy button 88 is a button for operating for adding a copied new section immediately after the selected section.

A vertical scroll bar 94 is displayed on the right end of the job edition area 70. If the number of sections is increased and cannot be fully displayed on one screen, the vertical scroll bar 94 on the right end of the screen may be operated to change a display range.

A vertical scroll bar 96 is provided on the right end of the job information display area 72. The vertical scroll bar 96 is operated so as to scroll information items to be displayed in the job information display area 72.

An edit button 98 is provided on the job information display area 72. A press on the edit button 98 displays the job information screen 42.

The job edition screen 44 includes a cancel button 100 and a save and quit button 102.

The cancel button 100 is a button for ending the job edition screen 44 without storing contents edited on the job edition screen 44.

If the cancel button 100 is pressed, a confirmation dialogue (not illustrated) is displayed. If an OK button in the confirmation dialogue is pressed, the job edition screen 44 is ended.

### [System configuration example]

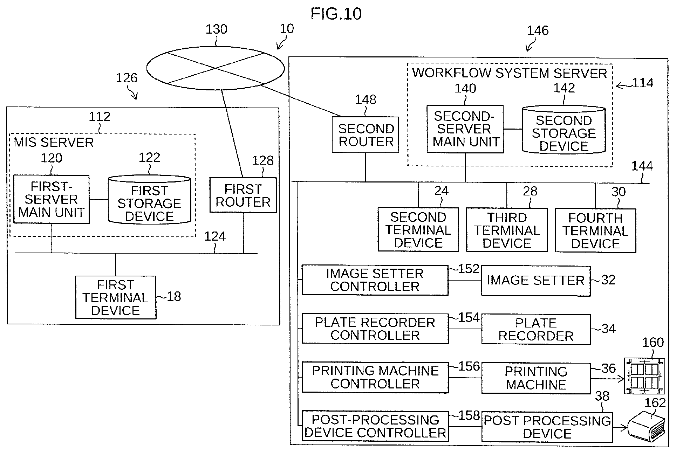

Fig. 10 is a block diagram illustrating a system configuration example of the printed matter production system 10. In Fig. 10, the same elements as those of Fig. 2 are designated by the same reference numerals and the explanation thereof is omitted.

The printed matter production system 10 in Fig. 10 includes a management information system (MIS) server 112 and a workflow system server 114.

The MIS server 112 is a server acting as the management information system 12 illustrated in Fig. 2. The workflow system server 114 is a server acting as the workflow creation support system 14 illustrated in Fig. 2 and the workflow management system 16. Specifically, Fig. 10 illustrates a system example in which a program for performing the function of the workflow creation support system 14 and a program for performing the function of the workflow management system 16 are installed in the same server cabinet.

The MIS server 112 includes a first-server main unit 120 and a first storage device 122. The first storage device 122 is connected to the first-server main unit 120. The first storage device 122 stores, for example, various kinds of management information including orders, sales, marketing, estimates, overall schedules, operation schedules, detail schedules, storage and retrieval, inventories, purchasing, and basic cost.

The first-server main unit 120 is connected to a first communication line 124. The first communication line 124 may serve as, for example, a local area network constructed in a sales site 126 managed by the sales department of a printing company.

The first terminal device 18 is a terminal device connected to the first communication line 124. The first terminal device 18 is connected to the first-server main unit 120 via the first communication line 124.

The first communication line 124 is connected to a first router 128. The first router 128 is a device that relays the first communication line 124 and a wide area network 130 such as the Internet. The first communication line 124 is connected to the wide area network 130 via the first router 128.

The workflow system server 114 includes a second-server main unit 140 and a second storage device 142. The second storage device 142 stores, for example, contents data, output data, job tickets, color profiles, and color sample data. The output data is, for example, plate making data, printing plate data, or calibration data. A job ticket is stored as, for example, a JDF file.

The second-server main unit 140 is connected to a second communication line 144. The second communication line 144 may serve as, for example, a local area network constructed in a printing site 146 managed by the production department of a printing company.

The second communication line 144 is connected to a second router 148. The second router 148 is a device that relays the second communication line 144 and the wide area network 130. The second communication line 144 is connected to the wide area network 130 via the second router 148. The second terminal device 24, the third terminal device 28, and the fourth terminal device 30 are each connected to the second communication line 144. These terminal devices are connected to the second-server main unit 140 via the second communication line 144.

An image setter controller 152, a plate recorder controller 154, a printing machine controller 156, and a post-processing device controller 158 are each connected to the workflow system server 114 via the second communication line 144.

The image setter controller 152 is a controller for controlling the operation of the image setter 32. The plate recorder controller 154 is a controller for controlling the operation of the plate recorder 34. The printing machine controller 156 is a controller for controlling the operation of the printing machine 36. The post-processing device controller 158 is a controller for controlling the operation of the post processing device 38.

The printing machine 36 is a device for outputting a printed sheet 160 by forming an image on a printing medium (not illustrated). The printing medium may be resin such as polyvinyl chloride and polyethylene terephthalate (PET), tarpaulin, or a metal sheet as well as paper such as synthetic paper, cardboard, and aluminum-evaporated paper. The printing medium may be a continuous medium such as a roll sheet or sheets cut in a specified size.

If the printing machine 36 is a relief duplicator, ink is deposited on a printing medium through a printing plate (not illustrated) and an intermediate transfer unit (not illustrated), which outputs a printed sheet 160 that is a printing medium bearing an image.

If the printing machine 36 is a calibrator, direct digital color proofing (DDCP), an inkjet color proofer, a low-resolution color laser printer (electrophotography), or an inkjet printer may be used. If the printing machine 36 is a digital printer, a printed sheet can be directly outputted without producing a printing plate.

The post processing device 38 performs processing such as surface treatment, folding, binding, and cutting on multiple printed sheets. Printed matters 162 (casebound books in the example of Fig. 10) are produced by processing using the post processing device 38. Printed matters may be finally produced in various forms in addition to casebound books.

### [Communication line]

Fig. 10 illustrates the first communication line 124 and the second communication line 144 that are connected via the wide area network 130, as a configuration example of the communication lines. The configuration of the communication lines is not limited to the example of Fig. 10. The communication lines can be configured in various patterns using a local area network, a wide area network, or any combination of the networks. For example, the combination of the first communication line 124, the wide area network 130 and the second communication line 144 may be replaced with a single local area network (intranet). In this case, the first router 128 and/or the second router 148 may be omitted.

The connection pattern of the first terminal device 18, the second terminal device 24, the third terminal device 28, and the fourth terminal device 30 is not limited to the example of Fig. 10. For example, all or some of the first terminal device 18, the second terminal device 24, the third terminal device 28, and the fourth terminal device 30 may be accessible to the MIS server 112 or the workflow system server 114 via the wide area network 130.

### [MIS server 112]

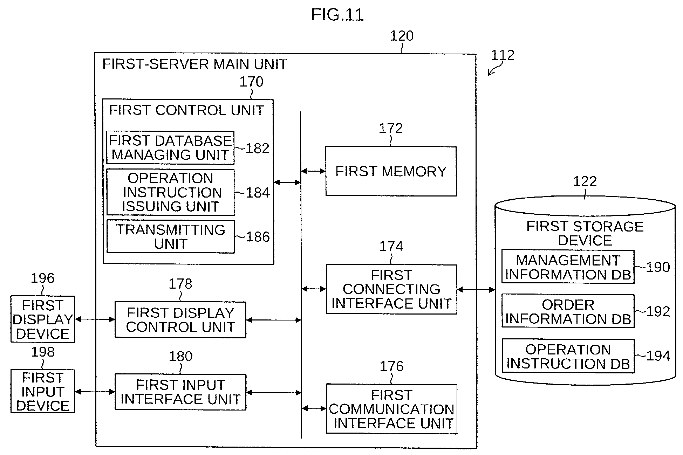

Fig. 11 is a block diagram illustrating the MIS server 112. The first-server main unit 120 constituting the MIS server 112 is a computer including a first control unit 170, a first memory 172, a first connecting interface unit 174, a first communication interface unit 176, a first display control unit 178, and a first input interface unit 180.

The first control unit 170 includes an information processor, e.g., a central processing unit (CPU). The first control unit 170 reads and executes programs stored in the first memory 172, enabling the functions of a first database managing unit 182, an operation instruction issuing unit 184, and a transmitting unit 186.

The first memory 172 stores, for example, programs and data that are necessary for the first control unit 170 that controls the constituent elements. The first memory 172 may include a non-transient and computer-readable storage medium. In this case, the computer-readable storage medium is, for example, a portable storage medium such as a magneto-optical disk, a compact disc read only memory (CD-ROM), a flash memory or an auxiliary storage device such as a read-only memory (ROM) and hard disk device that are stored in a computer system. The storage medium may store programs dynamically in a short time or store programs for a certain time. The first memory 172 may include a main storage such as a random access memory.

The first connecting interface unit 174 is an interface unit that transmits and receives data to and from the first storage device 122.

The first storage device 122 includes a management information DB 190 that is a database for management information, an order information DB 192 that is a database for order information, and an operation instruction DB 194 that is a database for the operation instruction 20 (Fig. 2).

The order information DB 192 stores, for example, management information including orders, sales, marketing, estimates, overall schedules, operation schedules, detail schedules, storage and retrieval, inventories, purchasing, and basic cost.

The operation instruction DB 194 stores data on the operation instruction 20 (Fig. 2) issued for each order. The operation instruction 20 is a data file that indicates an operation instruction provided for the production of the printed matters 162 (Fig. 10). The data format of the operation instruction 20 may be a general format, e.g., CSV or extendable markup language (XML) or a unique format.

The first storage device 122 can supply various kinds of information in response to a request from the first-server main unit 120.

The first database managing unit 182 accesses each database stored in the first storage device 122 and performs registration, updating, deletion, and reading of information.

The operation instruction issuing unit 184 is a processing unit that creates the operation instruction 20 based on the order information DB.

The transmitting unit 186 is a processing unit that transmits the electronic file of the operation instruction 20, which is created in the operation instruction issuing unit 184, to the workflow system server 114 (Fig. 10).

The first communication interface unit 176 is an interface unit that transmits and receives electric signals to and from an external device. The first-server main unit 120 is connected to the first communication line 124 (Fig. 10) via the first communication interface unit 176. The first-server main unit 120 can obtain various kinds of information from the workflow system server 114 (Fig. 10) through the first communication interface unit 176 and supply the information to the workflow system server 114. Moreover, the first-server main unit 120 can communicate with the first terminal device 18 through the first communication interface unit 176. The first-server main unit 120 can obtain information from the first terminal device 18 through the first communication interface unit 176 and provide the information for the first terminal device 18.

The first display control unit 178 is connected to a first display device 196.

The first display device 196 may be a display device, for example, a liquid crystal display or an organic electro-luminescence (EL) display in various display formats. The first input interface unit 180 is connected to a first input device 198. The first input device 198 may be one of devices such as a keyboard, a mouse, a touch panel, and a track ball or any combination thereof. The first display device 196 acts as a display unit that displays various kinds of information, and the first input device 198 acts as an operation unit that performs an operation for inputting various kinds of information. The combination of the first display device 196 and the first input device 198 acts as a user interface for the first-server main unit 120. Operations such as a system setting of the first-server main unit 120 can be performed using the first display device 196 and the first input device 198.

### [Block diagram of the workflow system server 114]

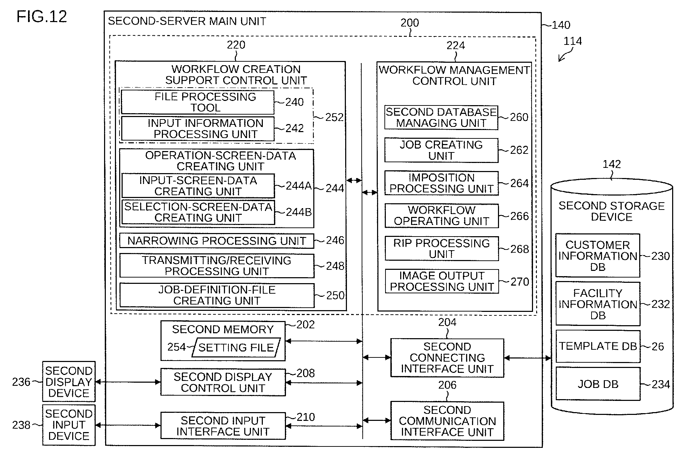

Fig. 12 is a block diagram illustrating the workflow system server 114. The workflow system server 114 is a web server. The second-server main unit 140 of the workflow system server 114 is a computer including a second control unit 200, a second memory 202, a second connecting interface unit 204, a second communication interface unit 206, a second display control unit 208, and a second input interface unit 210.

The hardware configuration of the second-server main unit 140 may be identical to that of the first-server main unit 120 illustrated in Fig. 11 or may be different from that of the first-server main unit 120 in various ways.

The second control unit 200 includes an information processor such as a central processing unit (CPU). The second control unit 200 reads and executes programs stored in the second memory 202, enabling the functions of a workflow creation support control unit 220 and a workflow management control unit 224.

The second memory 202 stores, for example, programs and data that are necessary for the second control unit 200 that controls the constituent elements. The second memory 202 may include a non-transient and computer-readable storage medium. In this case, the computer-readable storage medium is, for example, a portable storage medium such as a magneto-optical disk, a compact disc read only memory (CD-ROM), a flash memory or an auxiliary storage device such as a read-only memory (ROM) and hard disk device that are stored in a computer system. The storage medium may store programs dynamically in a short time or store programs for a certain time. The second memory 202 may include a main storage such as a random access memory.

The second connecting interface unit 204 is an interface unit that transmits and receives data to and from the second storage device 142. The second storage device 142 can supply various kinds of information in response to a request from the second-server main unit 140.

The second storage device 142 includes a customer information DB 230 that is a database for customer information, a facility information DB 232 that is a database for facility information such as the attribute of a production facility, the template DB 26 that is a database for various templates, and a job DB 234 that is a database containing accumulated JDF files of jobs created in the past.

The customer information DB 230 contains accumulated information including company names, addresses, telephone numbers, the names of persons in charge, email addresses, rules and/or cautions for each company and/or person in charge.

In the facility information DB 232, "mapping table" and "device information" are registered. The mapping table is a correlation chart illustrating the relationship among "main print", "calibration", and "workflow configuration". The printing machine 36 for main print may be a conventional printing press such as a relief duplicator or a digital printing press. Furthermore, the printing machine 36 for calibration may be the same device as in main print, an inkjet printer, or a digital printer.

The device information includes information on the printing machine 36 usable in the printing site 146 (Fig. 10). The device information includes, for example, printing media and applicability information on printing plates as well as the designation, identification number, date and time of use, operating ratio, and installation location of the printing machine 36. The device information may further include information on at least one of the image setter 32, the plate recorder 34, and the post processing device 38 that are usable in the printing site 146.

Moreover, a part of or the entire database stored in the second storage device 142 may be stored in the first storage device 122 illustrated in Figs. 10 and 11.

The second communication interface unit 206 is an interface that transmits and receives an electric signal to and from an external device. The second-server main unit 140 can obtain the operation instruction 20 and other kinds of information from the MIS server 112 (Fig. 10) through the second communication interface unit 206. Furthermore, the second-server main unit 140 can provide information for the second terminal device 24 (Fig. 10) and receive information from the second terminal device 24 through the second communication interface unit 206. Moreover, the second-server main unit 140 can provide various kinds of information for the third terminal device 28, the fourth terminal device 30, the image setter controller 152, the plate recorder controller 154, the printing machine controller 156, and the post-processing device controller 158, which are illustrated in Fig. 10, and receive information from these devices through the second communication interface unit 206.

The second display control unit 208 is connected to a second display device 236. The second display device 236 may be a display device such as a liquid crystal display and an organic electro-luminescence (EL) display in various display modes. The second input interface unit 210 is connected to a second input device 238. The second input device 238 may be one of devices such as a keyboard, a mouse, a touch panel, and a track ball or a combination thereof. The second display device 236 acts as a display unit that displays various kinds of information and the second input device 238 acts as an operation unit that inputs various kinds of information. A combination of the second display device 236 and the second input device 238 acts as a user interface for the second-server main unit 140. Operations such as a system setting of the second-server main unit 140 can be performed using the second display device 236 and the second input device 238.

The workflow creation support control unit 220 obtained by the second control unit 200 includes a file processing tool 240, an input information processing unit 242, an operation-screen-data creating unit 244, a narrowing processing unit 246, a transmitting/receiving processing unit 248, and a job-definition-file creating unit 250.

The file processing tool 240 is a file processing unit that receives the file of the operation instruction 20 (Fig. 2) obtained from the MIS server 112 (Figs. 10 and 11), converts the file to a required format, and then instructs job creation or job updating. For example, in the case of the file of the operation instruction 20 in CSV format, the file processing tool 240 is a CSV tool for processing a CSV file. The operation instruction 20 can be an electronic file in a file format different from that of the job definition file 22 (JDF file).

The input information processing unit 242 is a processing unit that processes input information inputted by an inputting operation or a selecting operation through the second terminal device 24. The input information processing unit 242 captures job basic information inputted from the job information screen 42 illustrated in Fig. 6. Moreover, the input information processing unit 242 captures setting information inputted from the job edition screen 44, which is illustrated in Fig. 8, and information on selected templates.

The file processing tool 240 and the input information processing unit 242 act as a job information capturing unit 252 that captures job information as job basic information. The functions of the file processing tool 240 and the input information processing unit 242 each correspond to an aspect of "job information capturing function."

The operation-screen-data creating unit 244 is a processing unit that creates display data for an operation screen provided for the second terminal device 24 illustrated in Fig. 10 or other customer terminals. The operation-screen-data creating unit 244 creates data necessary for screen display of the job list screen 40, the job information screen 42, the job edition screen 44, and the automatic trim calculation dialogue 46 that are illustrated in Figs. 4 to 9.

The operation-screen-data creating unit 244 creates hypertext markup language (HTML) documents viewed by browser software of the second terminal device 24 and other customer terminals. Moreover, the operation-screen-data creating unit 244 creates various data elements contained in HTML documents.

The operation-screen-data creating unit 244 includes an input-screen-data creating unit 244A and a selection-screen-data creating unit 244B. The input-screen-data creating unit 244A creates data necessary for display of the job information screen 42. Specifically, the input-screen-data creating unit 244A creates input screen data used for display of an input screen that allows a user to input information on some or all of parameters for specifying job contents.

The selection-screen-data creating unit 244B creates data necessary for display of the job edition screen 44 containing data of the list 90 as selection candidates as illustrated in Fig. 9. The selection-screen-data creating unit 244B creates data of the selection screen containing a list of templates as selection candidates narrowed by the narrowing processing unit 246. Specifically, the selection-screen-data creating unit 244B creates selection screen data used for displaying the selection screen that displays, as selection candidates, information on templates narrowed by the narrowing processing unit 246 and receives a selecting operation allowing a user to select one template from the selection candidates. The function of the selection-screen-data creating unit 244B corresponds to an aspect of "selection screen data creating function."

The narrowing processing unit 246 is a processing unit that narrows templates based on information included in the operation instruction 20 read from the file processing tool 240 and information captured through the input information processing unit 242. The narrowing processing unit 246 searches the templates pre-registered in the template DB 26 based on the job basic information and then narrows the templates as selection candidates. The function of the narrowing processing unit 246 corresponds to an aspect of "narrowing processing function."

The narrowing conditions of the narrowing processing unit 246 are described in a setting file 254. The setting file 254 is stored in the second memory 202. In the setting file 254, a combination of parameters used for narrowing is defined. The file format of the setting file 254 is not particularly limited. For example, a file in XML format may be used. The contents of the setting file 254 can be optionally rewritten.

The setting file 254 can be rewritten using the second display device 236 and the second input device 238. The second memory 202 containing the setting file 254 and the combination of the second display device 236 and the second input device 238 change and set the narrowing conditions for the narrowing processing unit 246, corresponding to an aspect of "condition setting unit."

The transmitting/receiving processing unit 248 performs transmission for providing the second terminal device 24 and other customer terminals with data created by the operation-screen-data creating unit 244. In response to operations from the second terminal device 24 and other customer terminals, the transmitting/receiving processing unit 248 receives signals for the operations. Information received by the transmitting/receiving processing unit 248 is processed by the input information processing unit 242.

The job-definition-file creating unit 250 creates the job definition file 22 (Fig. 2) based on information on one template selected by a selecting operation from the second terminal device 24 and information on other parameters. The created job definition file 22 is transmitted to the workflow management control unit 224. The function of the job-definition-file creating unit 250 corresponds to an aspect of "job definition file creating function."

The workflow management control unit 224 creates and updates jobs according to the job definition file 22, and operates and manages the workflow.

The workflow management control unit 224 includes a second database managing unit 260, a job creating unit 262, an imposition processing unit 264, a workflow operating unit 266, a RIP processing unit 268, and an image output processing unit 270.

The second database managing unit 260 accesses databases (230, 232, 26, 234) stored in the second storage device 142 to register, update, delete, and read information.

The job creating unit 262 creates and updates jobs according to the job definition file 22 (Fig. 2) created by the job-definition-file creating unit 250. Jobs created or updated by the job creating unit 262 are stored in a format of JDF files in the job DB 234.

The imposition processing unit 264 performs imposition according to an imposition setting specified in the jobs. The workflow operating unit 266 is a processing unit that executes a job and operates and manages a workflow.

The RIP processing unit 268 performs RIP processing for rasterizing document data for printing into dot information. The RIP processing unit 268 can perform RIP processing suitable for the output device of the image setter 32, the plate recorder 34, or the printing machine 36 that serves as a destination of images.

The image output processing unit 270 supplies a raster image (bitmap image) obtained by the RIP processing, to the output device.

The second-server main unit 140 including the workflow creation support control unit 220 illustrated in Fig. 12 corresponds to an aspect of "workflow creation support device." The combination of the second-server main unit 140 serving as an aspect of "workflow creation support device", the template DB 26, and the second terminal device 24 corresponds to an aspect of "workflow creation support system."

### [Second terminal device 24]

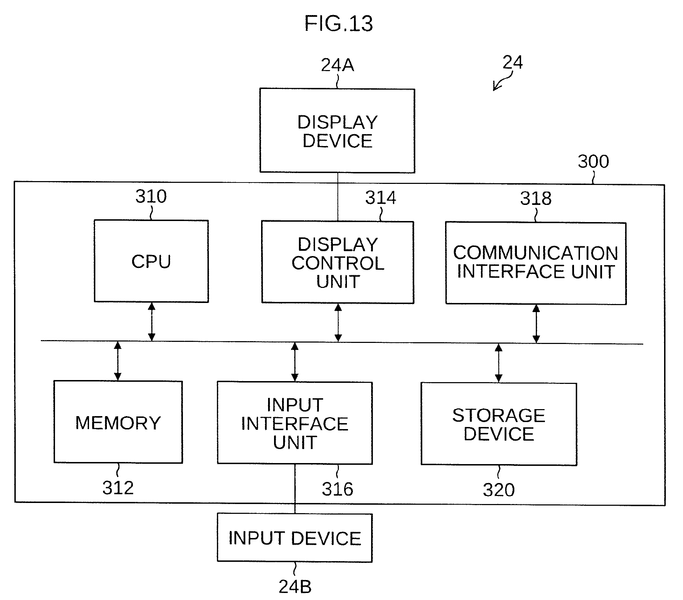

Fig. 13 is a block diagram of the second terminal device 24. The second terminal device 24 includes a computer provided with a terminal main unit 300, the display device 24A, and the input device 24B. The terminal main unit 300 includes a CPU 310, a memory 312, a display control unit 314, an input interface unit 316, a communication interface unit 318, and a storage device 320 with installed web browser software. The display device 24A is connected to the display control unit 314, and the input device 24B is connected to the input interface unit 316.

The display device 24A may be a display device such as a liquid crystal display and an organic electro-luminescence (EL) display in various display modes. The input device 24B may be one of devices such as a keyboard, a mouse, a touch panel, and a track ball or a combination thereof.

The first terminal device 18, the third terminal device 28, and the fourth terminal device 30 illustrated in Figs. 2 and 10 may be configured like the second terminal device 24 illustrated in Fig. 13.

### [Operations of the printed matter production system]

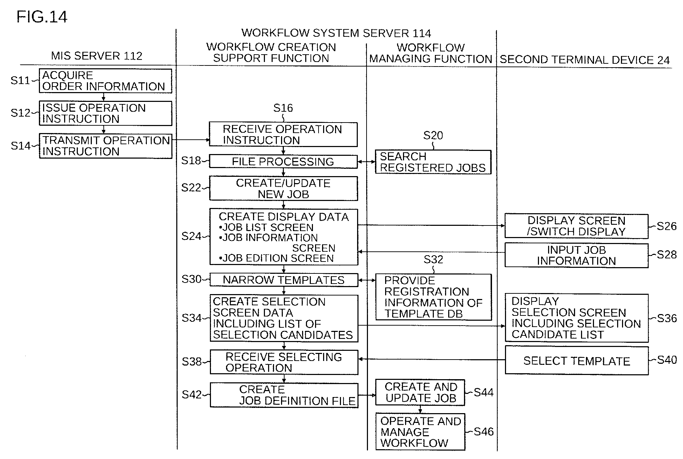

Fig. 14 is a sequence diagram illustrating the operations of the printed matter production system 10.

Step S11 is acquisition of order information. In step S11, the MIS server 112 acquires order information on the printed matters 162 from the first terminal device 18. For example, the order information includes, but not exclusively, an order number, an order date, a product name, a product type, the number of products, the number of pages, a processing pattern, a trim size, a color, a delivery due date, customer information, and a message.

Step S12 is issuing of an operation instruction. In step S12, the operation instruction issuing unit 184 of the MIS server 112 issues the operation instruction 20 for production of the printed matters 162, based on the order information acquired in step S11. For example, the operation instruction issuing unit 184 creates a data file according to a predetermined format (CSV format in this example) after the addition of the order information and the related information. The related information of the order information includes, for example, outsourcing specifications, standard cost, and man hours that are acquired from the management information DB 190 (Fig. 11).

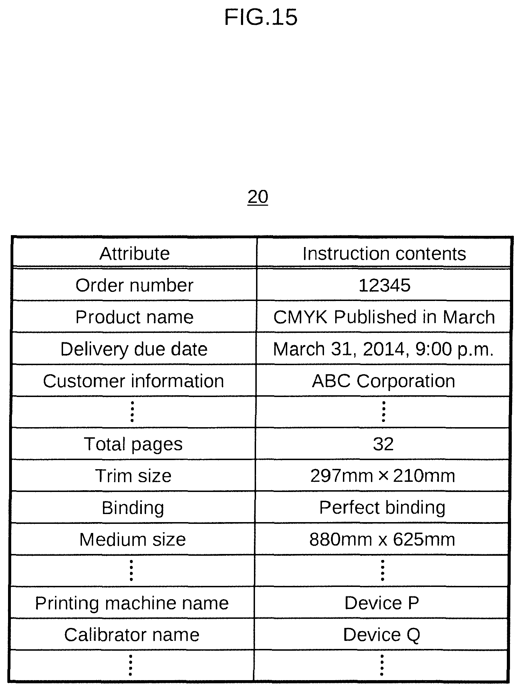

Fig. 15 is a schematic diagram illustrating an example of data constituting the file of the operation instruction 20. In this case, the data is illustrated as a list regarding data attributes (properties) and contents (instruction contents). In the actual operation instruction 20, only kinds of instruction contents are sequentially arranged on the assumption that the attributes are arranged in a known order. In the example of Fig. 15, the attributes includes an order number, a product name, a delivery due date, customer information, the number of pages, a trim size, a binding method, a medium size, a printer name, and a calibrator.

Step S 14 in Fig. 14 is transmission of the operation instruction. In step S14, the transmitting unit 186 of the MIS server 112 transmits the operation instruction 20 issued in step S12, to the workflow system server 114.

Step S16 is reception of the operation instruction. In step S16, the transmitting/receiving processing unit 248 of the workflow system server 114 receives the operation instruction 20.

Step S18 is file processing of processing the file of the received operation instruction 20 and acquiring information. In step S18, the file processing tool 240 of the workflow system server 114 categorizes items (parameters) for specifying the contents of an executed printing job and acquires information with reference to the received operation instruction 20.

Step S20 is a registration job searching step of searching for a job registered in the job DB 234. In step S20, the workflow system server 114 searches the job DB 234 for a registered job having the same order ID (order number) based on the order ID (order information) acquired in step S 18.

In step S22, a new job is created or an existing job is updated. In step S22, if a job having the same order ID (order number) is found unregistered in the job DB 234 according to the search result of step S20, the workflow system server 114 creates a new job. If a job having the same order ID (order number) is found registered in the job DB 234, the workflow system server 114 updates the corresponding job.

Step S24 is creation of data for display. In step S24, the operation-screen-data creating unit 244 of the workflow system server 114 creates data used for displaying the job list screen 40 (Fig. 5), the job information screen 42 (Fig. 6), the job edition screen 44 (Figs. 8 and 9).

Step S26 includes displaying an operation screen by the second terminal device 24 and switching display by a user. Data created for display in step S24 is provided for the second terminal device 24 so as to display screens on the display device 24A of the second terminal device 24. A user operation on the input device 24B of the second terminal device 24 switches the screens as illustrated in Fig. 4.

Step S28 is input of job information. In step S28, the job information screen 42 is displayed on the display device 24A of the second terminal device 24 and the user inputs job information. Data required for the display of the job information screen 42 is created by the input-screen-data creating unit 244A (Fig. 12).

Step S30 is narrowing of narrowing templates. In step S30, the narrowing processing unit 246 of the workflow system server 114 narrows templates under the narrowing conditions defined in the setting file 254.

Step S32 is provision of the registration information of the template DB 26 required for narrowing (step S30). In step S32, information on registered templates is provided for the narrowing processing unit 246 from the template DB 26.

Step S34 is creation of selection screen data containing a list of selection candidates of narrowed (step S30) templates (selection screen data creating step). In step S34, the selection-screen-data creating unit 244B of the workflow system server 114 creates data for display of the job edition screen 44 containing the list 90 illustrated in Fig. 9. The list 90 in Fig. 9 corresponds to "list of selection candidates."

Step S36 is display of a selection screen, which contains a list of selection candidates, on the display device 24A of the second terminal device 24. The selection screen data created in step S34 is provided for the second terminal device 24, displaying the job edition screen 44 containing the list 90 illustrated in Fig. 9.

Step S38 is reception of a selecting operation of a template. In step S38, the transmitting/receiving processing unit 248 of the workflow system server 114 waits for reception of a signal in response to a selecting operation of a template from the second terminal device 24.

Step S40 is selection of a template by a user. From the list 90 illustrated in Fig. 9, a user selects a desired template according to the designation of the template.

When the transmitting/receiving processing unit 248 of the workflow system server 114 acquires a signal for the selecting operation in step S40, information on the selected template is captured through the input information processing unit 242.

Step S42 is creation of the job definition file. In step S42, the job-definition-file creating unit 250 of the workflow system server 114 creates the job definition file 22 based on the information on the template selected in step S40, the information captured in the file processing of step S18, and the information inputted in the input of the job information in step S28.

Step S44 is creation or updating of a job according to the job definition file 22 created in the creation of the job definition file in step S42. In step S44, the job creating unit 262 of the workflow system server 114 creates a new job in response to the instruction of the job definition file 22 or corrects and updates an existing job. The JDF file of the job created in step S44 is registered in the job DB 234.

Step S46 is execution of the job created in step S44 and an operation and management of the workflow. In step S46, the workflow operating unit 266 of the workflow system server 114 causes the RIP processing unit 268 and the image output processing unit 270 to execute the items of the workflow.

The combination of "reception of the operation instruction" in step S16 and "file processing" in step S18 illustrated in Fig. 14 corresponds to an aspect of "acquisition of job information." Moreover, the step of acquiring job information inputted by "input of job information" in step S28 corresponds to an aspect of "acquisition of job information."

The step of creating the selection screen data containing the list 90 in step S34 corresponds to an aspect of "creation of selection screen data." The step of receiving a selecting operation of templates illustrated in steps S38 and S40 corresponds to an aspect of "selection."

The series of processes of creating the job definition file by the function of supporting creation of workflows in the workflow system server 114 illustrated in Fig. 14 can be recognized as an aspect of "workflow creation supporting method."

### [Another system configuration example]

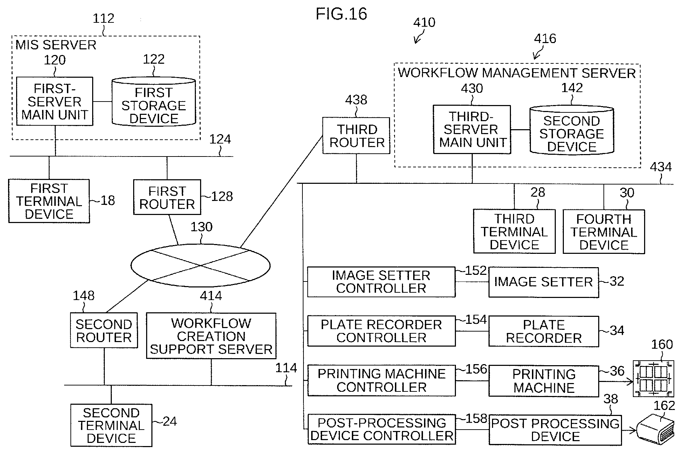

Fig. 16 is a schematic diagram of a printed matter production system according to another embodiment. In Fig. 16, elements identical or similar to the configuration of Fig. 10 are designated by the same reference numerals and the explanation thereof is omitted.

In a printed matter production system 410 of Fig. 16, the function of a workflow system server 114 illustrated in Figs. 10 and 12 is shared by two servers.

The printed matter production system 410 includes a workflow creation support server 414 and a workflow management server 416. The workflow creation support server 414 acts as the workflow creation support control unit 220 out of the functions of the workflow system server 114 illustrated in Fig. 12.

The detailed configuration of the workflow creation support server 414 is not illustrated. The server main unit constituting the workflow creation support server 414 includes the elements of the second-server main unit 140 other than the workflow management control unit 224.

The workflow management server 416 has the function of the workflow management control unit 224 illustrated in Fig. 12. The hardware configuration of a third-server main unit 430 constituting the workflow management server 416 may be identical to the configuration of the second-server main unit 140 illustrated in Fig. 12.

The detailed configuration of the third-server main unit 430 is not illustrated. The third-server main unit 430 includes the elements of the second-server main unit 140 illustrated in Fig. 12 other than the workflow creation support control unit 220 and the second memory 202.

The third-server main unit 430 is connected to a third communication line 434. The third communication line 434 may be a local area network constructed in a printing site managed by the production department of a printing company. The third communication line 434 is connected to a third router 438. The third communication line 434 is connected to the wide area network 130 via the third router 438.

Meanwhile, the second communication line 144 connected to the workflow creation support server 414 may be a local area network constructed in a printing site managed by the production department of a printing company or a local area network constructed in another site.

Fig. 16 illustrates an example of the printed matter production system 410 in which the second storage device 142 is connected to the third-server main unit 430. Instead of this example, the second storage device 142 may be connected to the workflow creation support server 414.

The workflow creation support function of the workflow creation support server 414 and the workflow managing function of the workflow management server 416 are identical to those of the workflow system server 114 in Fig. 14 and thus the explanation thereof is omitted.

The workflow creation support server 414 illustrated in Fig. 16 corresponds to an aspect of "workflow creation support device." The combination of the workflow creation support server 414, the template DB 26, and the second terminal device 24 corresponds to an aspect of "workflow creation support system."

### [Regarding program enabling a computer to perform the workflow creation support function]

A program enabling a computer to perform the workflow creation support function described in the embodiment is recorded in a compact disc read-only memory (CD-ROM), a magnetic disc, or other computer-readable medium (nontemporary information storage medium in tangible form). The program can be provided through the information storage medium. Instead of storing the program in the information storage medium, a program signal may be provided as download service through networks such as the Internet.

Moreover, the workflow creation support function described in the present embodiment may be provided as an application server to perform service for providing a processing function through a network.

### [Advantage of the embodiment]

The foregoing embodiment allows a user to easily select one of the plurality of pre-registered templates. This can reduce an operating time and the burden of the user. The embodiment of the present invention improves the selection of templates, thereby reducing the burden of job construction.

According to the embodiment of the present invention, a user can determine and select desired one of the templates serving as selection candidates narrowed under the narrowing conditions. Thus, the proper template can be reliably specified for a purpose, thereby improving the reliability of template selection.

Moreover, the above embodiment can optionally rewrite the setting file that determines the narrowing conditions used for narrowing the templates serving as selection candidates from the pre-registered templates. Thus, the narrowing conditions can be determined for each printing company.

Furthermore, the above embodiment can construct a printed matter production system that improves cooperation between the management information system of a printing company and existing workflow software.

### [First Modification]

In the example of the above embodiment, imposition templates as selection candidates are narrowed and the list 90 of selection candidates is displayed. The target templates of the present invention are not limited to imposition templates. For example, proper narrowing conditions can be set for workflow set templates and job templates, the templates can be narrowed based on job basic information, and a list of narrowing results can be presented to a user so as to allow the user to select one of the listed templates.

The present invention is quite effectively applied to imposition templates because of a large number of registered templates.

### [Second Modification]

The function of narrowing templates based on the narrowing conditions described in the above embodiment may be optionally eliminated.

For example, a setting function may be added so as to selectively set the narrowing function to activation(ON) or deactivation(OFF). A device for setting the narrowing function to activation or deactivation is a button provided as a GUI element or a setting button in a menu bar or a pull-down menu in the job edition screen 44 illustrated Figs. 8 and 9.

If the function of narrowing templates is deactivated, the list of registered templates can be displayed and/or a search can be made by text input.

### [Third Modification]

In the embodiment, templates matching the narrowing conditions are presented to a user and then the user is allowed to select one of the templates. In addition to this function, the system may have an automatic selecting function that automatically determines one of the plurality of registered templates.

For example, automatic selection rules determined for automatic selection may be set beforehand and a processing function may be provided to automatically determine one of the templates in compliance with the automatic selection rules. The automatic selection rules are desirably changed as necessary. In order to improve the reliability of selection, the use of the template automatically selected by the system may be confirmed by the user and the selection of the template may be finalized by user acceptance.

### [Fourth Modification]

The workflow creation support device of the present invention is not limited to the web server. For example, the display device of a computer acting as a workflow creation support device may display a selection screen as illustrated in Fig. 9, and then a user may select one template using the input device of the computer.

In the above embodiment of the present invention, the components can be optionally changed, added, or deleted without departing from the scope of the present invention. The present invention is not limited to the embodiment and can be changed in various ways by a person with an ordinary skill in the art within the technical idea of the present invention.

## Claims

1. A workflow creation support device (140) that supports creation of a workflow for printing,
the workflow creation support device comprising:
a job information capturing unit (252) that captures job information including information on a plurality of parameters for specifying job contents;
a narrowing processing unit (246) that narrows a plurality of pre-registered templates as selection candidates, using information on at least some of the parameters from the information on the parameters captured by the job information capturing unit;
a selection-screen-data creating unit (244B) that creates selection screen data used for displaying, as selection candidates, information on the templates narrowed by the narrowing processing unit and displaying a selection screen for receiving a selecting operation allowing a user to select one template from the selection candidates; and
a job-definition-file creating unit (250) that creates a job definition file based on information on the one template selected by the selecting operation and the information on the parameters.

2. The workflow creation support device (140) according to claim 1,
wherein the job information capturing unit includes a file processing unit that captures an electric file of an operation instruction created by an external system and acquires the job information from the electronic file of the operation instruction.

3. The workflow creation support device (140) according to claim 2,
wherein the operation instruction is an electronic file in a different file format from the job definition file.

4. The workflow creation support device (140) according to any one of claims 1 to 3, further comprising an input-screen-data creating unit (244A) that creates input screen data used for displaying an input screen allowing the user to input information on some or all of the parameters,
the job information capturing unit including an input information processing unit that acquires the job information including information inputted from the input screen.

5. The workflow creation support device (140) according to any one of claims 1 to 4,
wherein the narrowing processing unit narrows the plurality of pre-registered templates as the selection candidates, by using the information on at least some of the parameters as a search key from the information on the parameters.

6. The workflow creation support device (140) according to any one of claims 1 to 5, further comprising a condition setting unit (202, 236, 238) that sets narrowing conditions for narrowing,
the narrowing conditions being changeable.

7. The workflow creation support device (140) according to any one of claims 1 to 6,
wherein the template is an imposition template.

8. The workflow creation support device (140) according to any one of claims 1 to 7,
wherein the workflow creation support device is a web server.

9. A workflow creation support system (14) comprising:
the workflow creation support device (140) according to any one of claims 1 to 8;
a template database (26) that stores the templates; and
a terminal device (24) connected to the workflow creation support device via a communication line,
wherein the terminal device includes a display device and an input device,
the display device displays the selection screen based on the selection screen data, and
the selecting operation is performed from the input device.

10. A workflow creation support method that supports creation of a workflow for printing,
the method comprising:
a job information capturing step of capturing job information including information on a plurality of parameters for specifying job contents;
a narrowing processing step of narrowing a plurality of pre-registered templates as selection candidates, using information on at least some of the parameters from the information on the parameters captured by the job information capturing unit;
a selection screen data creating step of creating selection screen data used for displaying, as selection candidates, information on the templates narrowed in the narrowing processing step and displaying a selection screen for receiving a selecting operation allowing a user to select one template from the selection candidates;
a selecting step of displaying the selection screen containing display of the selection candidates on a display device and receiving the selecting operation; and
a job-definition-file creating step of creating a job definition file based on information on the one template selected by the selecting operation and the information on the parameters.

11. A computer program adapted to perform the method according to claim 10.
